# EUROPEAN PATENT APPLICATION

(11) **EP 4 270 840 A1**
(43) Date of publication of application: **01.11.2023**
(21) Application number: 21928506.1
(22) Date of filing: 03.03.2021
(51) Int. Cl.: H04L 5/00, H04L 1/18

(54) **METHOD AND APPARATUS FOR DETERMINING FEEDBACK CODEBOOK, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); XU, Jing, Dongguan, Guangdong 523860 (CN)
(74) Representative: Novagraaf Technologies
(86) International application number: PCT/CN2021/078964
(87) International publication number: WO 2022/183417

(57) **Abstract**

Embodiments of the present application provide a method for determining a feedback codebook. The method comprises: a terminal device determining a first time unit for transmitting feedback information of a first semi persistent schedule physical downlink shared channel (SPS PDSCH), wherein a time preconfigured for transmitting the feedback information of the first SPS PDSCH is a second time unit, and the first time unit is different from the second time unit; the terminal device receiving at least one dynamic schedule PDSCH in a first downlink reception occasion set corresponding to the first time unit, wherein the first downlink reception occasion set is used for determining a first feedback codebook; and the terminal device determining a second feedback codebook that is transmitted within the first time unit, wherein the second feedback codebook is obtained according to the first feedback codebook, and the second feedback codebook comprises feedback information corresponding to the at least one dynamic schedule PDSCH. The embodiments of the present application further provide an apparatus for determining a feedback codebook, and a device and a storage medium.

## Description

### TECHNICAL FIELD

The present disclosure relates to the field of communication technology, and in particular to a method and an apparatus for determining a feedback codebook, a device and a storage medium.

### BACKGROUND

Data transmission may include a dynamic scheduling transmission and a semi-static/semi-persistent scheduling (SPS) transmission. In a New Radio (NR) system, in order to better support Ultra-reliable low latency (URLLC) transmission, a period of SPS will be shortened. The shorter period of SPS will lead to a preconfigured time domain resource of SPS Physical Downlink Shared Channel (PDSCH) to be unable to transmit feedback information of SPS PDSCH, thus causing a problem that the feedback information of the SPS PDSCH (that is, ACK/NACK information) is discarded.

At present, a technology of deferring transmission of SPS ACK/NACK (deferring HARQ-ACK) may be used in the related art to avoid the system efficiency reduction caused by the feedback information corresponding to SPS PDSCH being discarded. In particular, the terminal device may defer the feedback information of the SPS PDSCH to another time domain resource for transmission. However, there is no clear method to determine a feedback codebook in the technology of deferring transmission of SPS ACK/NACK.

### SUMMARY

In embodiments of the present disclosure, there is provided a method and an apparatus for determining a feedback codebook, a device and a storage medium.

In a first aspect, the embodiments of the present disclosure provide a method for determining a feedback codebook. The method includes the following operations.

A terminal device determines a first time unit for transmitting feedback information of a first semi persistent scheduling (SPS) physical downlink shared channel (PDSCH). A time unit preconfigured for transmitting the feedback information of the first SPS PDSCH is a second time unit, and the first time unit is different from the second time unit.

The terminal device receives at least one dynamic scheduling PDSCH inside a set of occasions for first downlink receptions corresponding to the first time unit. The set of occasions for first downlink receptions is used for determining a first feedback codebook.

The terminal device determines a second feedback codebook that is transmitted within the first time unit. The second feedback codebook is obtained according to the first feedback codebook, and the second feedback codebook includes feedback information corresponding to the at least one dynamic scheduling PDSCH.

In a second aspect, the embodiments of the present disclosure provide a method for determining a feedback codebook. The method includes the following operations.

A network device determines a first time unit for transmitting feedback information of a first SPS PDSCH. A time unit preconfigured for transmitting the feedback information of the first SPS PDSCH is a second time unit, and the first time unit is different from the second time unit.

The network device transmits at least one dynamic scheduling PDSCH inside a set of occasions for first downlink receptions. The set of occasions for first downlink receptions is used for determining a first feedback codebook.

The network device receives a second feedback codebook within a first time unit corresponding to the set of occasions for first downlink receptions. The second feedback codebook is obtained by a terminal device according to the first feedback codebook, and the second feedback codebook includes feedback information corresponding to the at least one dynamic scheduling PDSCH.

In a third aspect, the embodiments of the present disclosure provide an apparatus for determining a feedback codebook. The apparatus includes a first determining unit, a first receiving unit and a first processing unit.

The first determining unit is configured to determine a first time unit for transmitting feedback information of a first SPS PDSCH. A time unit preconfigured for transmitting the feedback information of the first SPS PDSCH is a second time unit, and the first time unit is different from the second time unit.

The first receiving unit is configured to receive at least one dynamic scheduling PDSCH inside a set of occasions for first downlink receptions corresponding to the first time unit. The set of occasions for first downlink receptions is used for determining a first feedback codebook.

The first processing unit is configured to determine a second feedback codebook that is transmitted within the first time unit. The second feedback codebook is obtained according to the first feedback codebook, and the second feedback codebook includes the at least one dynamic scheduling PDSCH.

In a fourth aspect, the embodiments of the present disclosure provide an apparatus for determining a feedback codebook. The apparatus includes a second transmitting unit, a second determining unit and a second receiving unit.

The second transmitting unit is configured to determine a first time unit for transmitting feedback information of a first SPS PDSCH. A time unit preconfigured for transmitting the feedback information of the first SPS PDSCH is a second time unit, and the first time unit is different from the second time unit.

The second determining unit is configured to transmit at least one dynamic scheduling PDSCH inside a set of occasions for first downlink receptions. The set of occasions for first downlink receptions is used for determining a first feedback codebook.

The second receiving unit is configured to receive a second feedback codebook within a first time unit corresponding to the set of occasions for first downlink receptions. The second feedback codebook is obtained by a terminal device according to the first feedback codebook, and the second feedback codebook includes feedback information corresponding to the at least one dynamic scheduling PDSCH.

In a fifth aspect, the embodiments of the present disclosure further provide a terminal device, which includes a first transceiver, a first processor, and a first memory for storing a computer program.

The first transceiver, the first processor and the first memory communicate through a first communication bus.

The first processor is configured to communicate with a network device through the first transceiver.

The first processor is further configured to cooperate with the first transceiver to implement, when running the computer program stored in the first memory, operations of the method of the first aspect.

In a sixth aspect, the embodiments of the present disclosure further provide a network device, which includes a second transceiver, a second processor, and a second memory for storing a computer program.

The second transceiver, the second processor and the second memory communicate through a second communication bus.

The second processor is configured to communicate with the terminal device through the second transceiver.

The second processor is further configured to cooperate with the second transceiver to implement, when running the computer program stored in the second memory, operations of the method of the second aspect.

In a seventh aspect, the embodiments of the present disclosure provide a computer-readable storage medium, having stored thereon a computer program. The computer program is executed by a first processor to implement operations of the method of the first aspect; or the computer program is executed by a second processor to implement operations of the method of the second aspect.

In the method and apparatus for determining the feedback codebook, the device and the storage medium provided by the embodiments of the present disclosure, the terminal device may defer a transmission of the feedback information of the first SPS PDSCH to the first time unit. In addition, the terminal device may receive at least one dynamically configured PDSCH inside a set of occasions for first downlink receptions corresponding to the first time unit, and the set of occasions for first downlink receptions is used for determining a first feedback codebook. In this way, the terminal device may generate a second feedback codebook transmitted within the first time unit based on the first feedback codebook. That is, the terminal device may determine the second feedback codebook transmitted within the first time unit according to the first feedback codebook corresponding to the set of occasions for first downlink receptions, thereby avoiding a problem that the PDSCH feedback information is discarded due to the terminal device being unable to determine the feedback codebook of the first time unit, and improving the system efficiency.

### BRIEF DESCRIPTION OF THE DRAWINGS

FIG. 1 is a schematic diagram of a transmission timing of feedback information in the related art provided by an embodiment of the present disclosure.
FIG. 2 is a first schematic diagram of a slot structure provided by an embodiment of the present disclosure.
FIG. 3 is a second schematic diagram of a slot structure provided by an embodiment of the present disclosure.
FIG. 4 is a schematic diagram of a wireless communication system architecture provided by an embodiment of the present disclosure.
FIG. 5 is a first schematic flowchart of a method for determining a feedback codebook provided by an embodiment of the present disclosure.
FIG. 6 is a third schematic diagram of a slot structure provided by an embodiment of the present disclosure.
FIG. 7 is a fourth schematic diagram of a slot structure provided by an embodiment of the present disclosure.
FIG. 8 is a fifth schematic diagram of a slot structure provided by an embodiment of the present disclosure.
FIG. 9 is a second schematic flowchart of a method for determining a feedback codebook provided by an embodiment of the present disclosure.
FIG. 10 is a first structural block diagram of an apparatus for determining a feedback codebook provided by an embodiment of the present disclosure.
FIG. 11 is a second structural block diagram of an apparatus for determining a feedback codebook provided by an embodiment of the present disclosure.
FIG. 12 is a schematic block diagram of a terminal device provided by an embodiment of the present disclosure.
FIG. 13 is a schematic block diagram of a network device provided by an embodiment of the present disclosure.

### DETAILED DESCRIPTION

In order to make the object, technical solution and advantages of the present disclosure clearer, the embodiments of the present disclosure will be described in further detail below with reference to the accompanying drawings, which are provided for illustration only and are not intended to limit the embodiments of the present disclosure.

It should be noted that the terms "first", "second", etc. in the description and claims of the present disclosure and the above drawings are used to distinguish different objects, and are not used to describe a particular order. Furthermore, the terms "including/comprising" and "having" and any variations thereof are intended to cover non-exclusive inclusion. For example, a process, method, system, product, or device that includes a series of operations or units is not limited to the listed operations or units, but optionally may include operations or units that are not listed, or optionally also includes other operations or units inherent to these processes, methods, products, or devices.

Prior to further detailed description of the embodiments of the present disclosure, the terms and terminology referred to in the embodiments of the present disclosure will be explained, and the terms and terminology are applicable to the following interpretation.
1) Frame structure: a basic frame structure of NR system is in a unit of slot.

Under a conventional Cyclic redundancy (CP) configuration, each slot contains 14 Orthogonal Frequency Division Multiplexing (OFDM) symbols. Under an extended CP configuration, each slot contains 12 OFDM symbols. OFDM symbols in each slot may be divided into three categories, including a downlink OFDM symbol, an uplink OFDM symbol and a flexible OFDM symbol. According to the actual scheduling of network device, the flexible OFDM symbol may be used to transmit downlink data or uplink data, that is, a transmission direction of the OFDM symbol is not fixed.

NR frame structure configuration adopts a manner of a combination of semi persistent configuration of Radio Resource Control (RRC) layer signaling and dynamic configuration of Downlink Control Information (DCI) to flexibly configure. RRC configuration supports two manners of cell-specific RRC configuration and UE-specific RRC configuration. DCI configuration supports two manners of direct indication by Slot Format Indication (SFI) and determination by DCI scheduling.

The semi persistent frame structure configuration means that the NR system configures frame structure based on a period, and there is only one transition point from downlink to uplink in each period to ensure the continuity of downlink resources and uplink resources in each period. The period of the frame structure in Rel-15 may be 0.5ms, 0.625ms, 1ms, 1.25ms, 2ms, 2.5ms, 5ms and 10ms.

In addition, the dynamic frame structure configuration of DCI may be realized by DCI format 2_0 indicating SFI, or realized by scheduling uplink or downlink data transmission by DCI format 0_0/0_1/0_2/1_0/1_1/1_2. The manner of scheduling data does not change the frame structure, but DCI scheduling uplink or downlink data transmission gives a transmission direction of the scheduled symbols implicitly.

2) Semi Persistent Scheduling (SPS) transmission: SPS transmission means that transmission resources and transmission manners are semi-continuous/semi-persistent configuration, and the network device may activate/release the corresponding SPS transmission through DCI. That is, once the SPS transmission is activated, no physical layer signaling (e.g. DCI signaling) is required for subsequent scheduling.

In Release 15 (R15) of NR, the terminal device is configured with at most one set of SPS transmission parameters. The SPS transmission parameters configured by network device through high-level signaling may include: a period of SPS, time domain resources, physical uplink control channel (PUCCH) resources for transmitting ACK/NACK information, etc.

In R15, the shortest of period of SPS transmission is 10ms, and the longest uplink and downlink handover period supported by R15 is 10ms. That is, at least one determined uplink transmission resource is included within 10ms. Therefore, the SPS PDSCH adopts independent feedback, that is, one SPS PDSCH corresponds to one PUCCH to carry its ACK/NACK information.

In addition, when the network device activates the SPS through the DCI, the activation instruction may further indicate some parameters of the SPS transmission process, including frequency domain resources and a feedback timing (k₁).

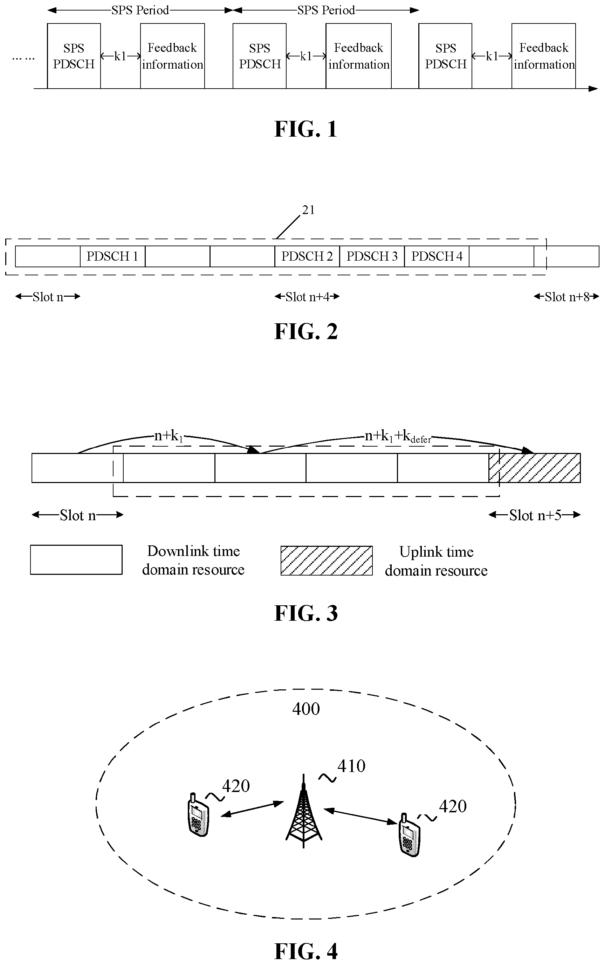

Referring to the schematic diagram of a transmission timing of feedback information in the related art illustrated in FIG. 1, once the SPS is activated, the network device will transmit the SPS PDSCH to the terminal device at the same time resource in each period of SPS. The terminal device will report the feedback information of the SPS PDSCH to the network device after receiving the SPS PDSCH each time and delaying a feedback timing (k₁).

3) Feedback codebook: R15 supports two manners to generate feedback codebook, including a first type of feedback codebook (Type-1 feedback codebook), that is, semi static HARQ-ACK codebook, and the second type of feedback codebook (Type-2 feedback codebook), that is, dynamic HARQ-ACK codebook.

The Type-1 feedback codebook determines the number of bits of ACK/NACK information corresponding to PDSCH in a semi static manner, that is, the number of ACK/NACK bits included in the Type-1 feedback codebook does not depend on the actual number of PDSCH received, but is determined according to the semi static configured downlink resources available for transmitting PDSCH (i.e., the maximum number of PDSCH that may be received). The method has an advantage of avoiding the ambiguity between the terminal and the base station in understanding a size of the ACK/NACK feedback codebook because the terminal does not receive part of the PDSCH, so that the base station cannot correctly receive the feedback information from the terminal.

Referring to the schematic diagram of the slot structure illustrated in FIG. 2, slots included in a dashed box 21 is a set of occasions for candidate PDSCH receptions corresponding to a slot n+8. Specifically, the set of occasions for candidate PDSCH receptions may include 8 slots, namely, slot n to slot n+7. The terminal device receives the PDSCH only in four slots including slot n+1 and slot n+4 to slot n+6. Therefore, in the Type-1 feedback codebook, the terminal device needs to feedback 8 bits of information, in which occasions for candidate receptions that does not receive the PDSCH correspond to NACK information. Here, the Type-1 feedback codebook transmitted by the terminal within the slot n+8 is {NACK, b1, NACK, NACK, b2, b3, b4, NACK}. Here, b1 is the feedback information of slot n+1, and b2 to b4 are the feedback information of slot n+4 to slot n+6.

In addition, Type-2 feedback codebook mainly reduces the signaling overhead of feedback information, that is, the number of ACK/NACK information is determined according to the actual number of scheduled PDSCH in a set of PDCCH monitoring occasions. As an example, referring to the schematic diagram of a slot illustrated in FIG. 2, when adopting the Type-2 feedback codebook, the terminal device only needs to feedback 4 bits of information, and the specific Type-2 feedback codebook is {b1, b2, b3, b4}. The disadvantage of using Type-2 feedback codebook is that when the terminal device does not receive part of the PDSCH sent by the network device (for example, the last PDSCH), there is a problem that the terminal device and the network device have inconsistent understanding of an actual scheduled PDSCH quantity, resulting in inconsistent understanding of the feedback information quantity between the terminal device and the network device.

In NR R16, in order to better support URLLC transmission, the period of SPS is shortened to a minimum of 1ms. For an SPS PDSCH, if time domain resources determined according to the preconfigured feedback timing (k₁) are not available for transmitting the feedback information of the SPS PDSCH, the feedback information of the SPS PDSCH will be discarded.

Exemplary, the slot structure supported by the NR system is illustrated in FIG. 3, and slot n to slot n+4 are downlink time domain resources, which are only used for transmitting downlink data. The slot n+5 is an uplink time domain resource and is only used for transmitting uplink data. A set of occasions for candidate PDSCH receptions corresponding to the slot n+5 includes slots n+1 to n+4. After receiving the data of the SPS PDSCH in the slot n, the terminal device may determine that the feedback information of the SPS PDSCH is transmitted within the slot n+2 according to the preconfigured feedback timing (for example, a value of k₁ is 2). However, slot n+2 is actually a downlink time domain resource, so slot n+2 is unable to transmit the feedback information of SPS PDSCH. In this case, the feedback information of the SPS PDSCH is discarded.

In order to avoid the system efficiency reduction caused by the information corresponding to SPS PDSCH being discarded, NR R17 supports a feedback enhancement of SPS PDSCH. Specifically, the terminal device receives the SPS PDSCH in the slot/sub-slot n, and if the slot/sub-slot n+k₁ is unable to transmit the feedback information corresponding to the SPS PDSCH, the feedback information of the SPS PDSCH may be deferred to the slot/sub-slot n+k₁ + k_{defer} for transmission. Referring to FIG. 3, if a k_{defer} value is 3, the feedback information of SPS PDSCH received in slot n is deferred to transmission in slot n+5.

However, in practical applications, the set of occasions for candidate PDSCH receptions corresponding to the slot/sub-slot n+k₁ + k_{defer} probably does not include the slot/sub-slot n for transmitting the SPS PDSCH. For example, slot n is not included in the set of occasions for candidate PDSCH receptions corresponding to slot n+5 in FIG. 3. Therefore, in the technology of deferring transmission of SPS ACK/NACK, there is no method to determine how to determine the feedback codebook transmitted within the slot/sub-slot n+k₁ + k_{defer}, whether the feedback codebook contains or does not contain the feedback information of SPS PDSCH in the slot/sub-slot n, and how to multiplex the feedback information of SPS PDSCH in the slot/sub-slot n into the feedback codebook transmitted within the slot/sub-slot n+k₁ + k_{defer}.

Based on this, the embodiments of the present disclosure provide a method for determining a feedback codebook. Specifically, the terminal device may defer a transmission of the feedback information of the first SPS PDSCH to the first time unit. In addition, the terminal device may receive at least one dynamically configured PDSCH inside a set of occasions for first downlink receptions corresponding to the first time unit, and the set of occasions for first downlink receptions is used for determining a first feedback codebook. In this way, the terminal device may generate a second feedback codebook transmitted within the first time unit based on the first feedback codebook. That is, the terminal device can determine the second feedback codebook transmitted within the first time unit according to the first feedback codebook corresponding to the set of occasions for first downlink receptions, thereby avoiding a problem that the PDSCH feedback information is discarded due to the terminal device being unable to determine the feedback codebook of the first time unit, and improving the system efficiency.

FIG. 4 illustrates a wireless communication system 400 applied in embodiments of the present disclosure. The wireless communication system 400 may include a network device 410. The network device 410 may be a device that communicates with a terminal device. The network device 410 may provide communication coverage for a particular geographic area and may communicate with terminal devices located within the coverage area. Optionally, the network device 410 may be a base transceiver station (BTS) in a Global System of Mobile communication (GSM) system or a Code Division Multiple Access (CDMA) system, a NodeB (NB) in a Wideband Code Division Multiple Access (WCDMA) system, an evolution NodeB (eNB or eNodeB) in a Long Term Evolution (LTE) system, or a wireless controller in a cloud radio access network (CRAN), or the network device may be a relay station, an access point, an in-vehicle device, a wearable device, a network-side device (such as gNB) in a 5th Generation (5G) network or a network device in a future evolved public land mobile network (PLMN), etc.

The wireless communication system 400 also includes at least one terminal device 420 located within the coverage area of the network device 410. The terminal device 420 may be mobile or fixed. Optionally, the terminal device 420 may refer to an access terminal, User Equipment (UE), a subscriber unit, a subscriber station, a mobile station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, a Wireless Local Loop (WLL) station, a Personal Digital Assistant.

It should be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects.

The technical solutions in the embodiments of the present disclosure will be clearly and completely described below with reference to the accompanying drawings in the embodiments of the present disclosure.

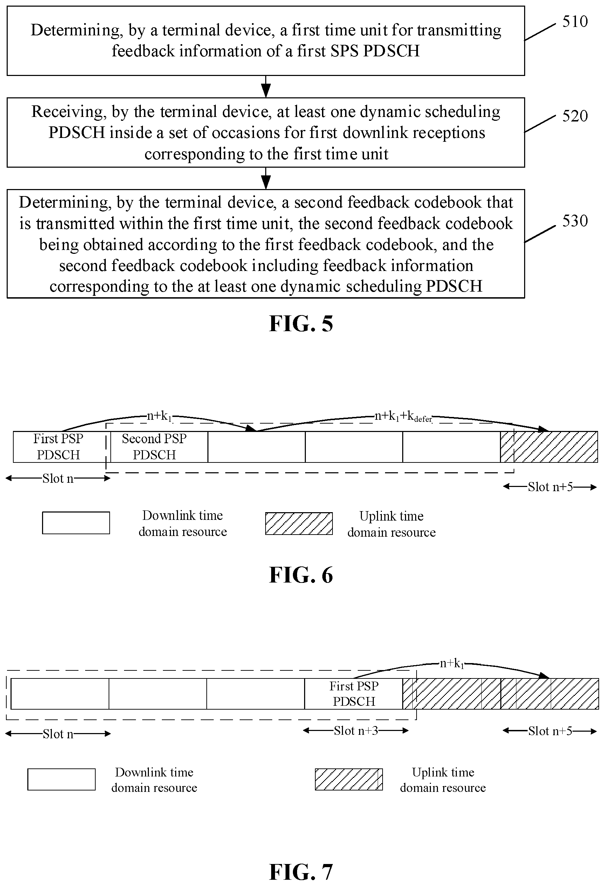

Embodiments of the present disclosure provide a method for determining a feedback codebook, which may be applied to a terminal device 420 in the communication system architecture illustrated in FIG. 4. Specifically, referring to the schematic flowchart illustrated in FIG. 5, the method for determining the feedback codebook provided by the embodiments of the present disclosure may include the following operations.

At block 510, the terminal device determines a first time unit for transmitting feedback information of a first SPS PDSCH.

A time unit preconfigured for transmitting the feedback information of the first SPS PDSCH is a second time unit, and the first time unit is different from the second time unit.

In the embodiments of the present disclosure, both the first time unit and the second time unit are time domain resource units for transmitting data. Here, the first time unit and the second time unit may be in a slot/sub-slot unit or may be in a group of multiple time domain OFDM symbols as a time unit. Embodiments of the present disclosure are not limited to the types of the first time unit and the second time unit.

Here, the first SPS PDSCH may be understood as data transmitted by the network device and received by the terminal device on a scheduled static resource. First feedback information is ACK/NACK information of the Hybrid Automatic Repeat Request (HARQ) corresponding to the first SPS PDSCH.

In the embodiments of the present disclosure, a second time unit preconfigured for transmitting the feedback information of the first SPS PDSCH may be determined by the terminal device based on the feedback timing.

Specifically, when receiving the first SPS PDSCH in the slot n, the terminal device may determine the second time unit preconfigured for transmitting the feedback information of the first SPS PDSCH as a slot n+k₁ according to a preconfigured feedback timing k₁.

It should be noted that the feedback timing k₁ is configured by a high-level signaling or indicated in an activation instruction. Embodiments of the present disclosure are not limited herein to a source of the feedback timing.

In the embodiments of the present disclosure, a resource for transmitting the Physical Uplink Control Channel (PUCCH) within the second time unit preconfigured for transmitting the feedback information of the first SPS PDSCH is limited.

The resource for transmitting the PUCCH within the second time unit being limited includes:
a time domain symbol occupied by the PUCCH for transmitting the feedback information of the first SPS PDSCH within the second time unit including at least one of:
a downlink symbol, a flexible symbol or a time domain symbol occupied by a synchronization signal or a broadcast channel.

It can be understood that the second time unit preconfigured for transmitting the feedback information of the first SPS PDSCH fails to be used for transmitting the first SPS PDSCH feedback information because the second time unit is configured by the network device for other purposes (e.g. transmitting downlink data, transmitting synchronization signals, or transmitting broadcast signals).

Based on this, the terminal device may defer transmission of the feedback information of the first SPS PDSCH to the first time unit.

In the embodiments of the present disclosure, the terminal device may determine the first time unit after the deferred transmission according to the feedback timing k₁ and the deferred time offset value k_{defer}. Specifically, when receiving the first SPS PDSCH in the slot n, the terminal device may defer the transmission of the first feedback information to the slot n+k₁ + k_{defer}, that is, the first time unit is the slot n+k₁ + k_{defer}.

It should be noted that the deferred time offset value k_{defer} may be configured by the network device or may be a value pre-agreed between the terminal device and the network device, and the embodiments of the present disclosure does not limit the source of the deferred time offset value k_{defer}.

At block 520, the terminal device receives at least one dynamic scheduling PDSCH inside a set of occasions for first downlink receptions corresponding to the first time unit.

The set of occasions for first downlink receptions is used for determining a first feedback codebook.

In the embodiments of the present disclosure, the first time unit is used for transmitting the PUCCH of the terminal device. In general, in order to improve resource utilization, a PUCCH may be configured to transmit multiple downlink data feedback information. That is, in the embodiments of the present disclosure, the first time unit may correspond to a set of occasions for first downlink receptions composed of a plurality of time units, and feedback information corresponding to each reception occasion in the set of occasions for first downlink receptions is transmitted within the first time unit.

Here, the set of occasions for first downlink receptions may refer to a set of *M_{A,c}* occasions for candidate PDSCH receptions or SPS PDSCH releases, or other types of set of occasions for downlink receptions, which are not limited in the embodiments of the present disclosure.

It should be noted that the network device may indicate the first time unit corresponding to the set of occasions for first downlink receptions for the terminal device through DCI information.

In the embodiments of the present disclosure, the terminal device may receive at least one dynamic scheduling PDSCH inside a set of occasions for first downlink receptions from the network device. Correspondingly, the feedback information of the at least one dynamic scheduling PDSCH may be transmitted within the first time unit.

In addition, in the embodiments of the present disclosure, the set of occasions for first downlink receptions is used for determining a first feedback codebook. It will be understood that the first feedback codebook is generated by the terminal device based on the downlink data, which is received by the terminal device within each reception occasion inside the set of occasions for first downlink receptions.

In the embodiments of the present disclosure, the first feedback codebook may be a Type-1 feedback codebook corresponding to the set of occasions for first downlink receptions, that is, a size of the first feedback codebook is related to the total number of reception occasions contained in the set of occasions for first downlink receptions. Each reception occasion in the set of occasions for first downlink receptions corresponds to a bit in the first feedback codebook, or each reception occasion in the set of occasions for first downlink receptions corresponds to a fixed number of bits (e.g. two bits) in the first feedback codebook.

At block 530, the terminal device determines a second feedback codebook that is transmitted within the first time unit. The second feedback codebook is obtained according to the first feedback codebook, and the second feedback codebook includes feedback information corresponding to the at least one dynamic scheduling PDSCH.

It will be understood that after receiving at least one dynamic scheduling PDSCH inside a set of occasions for first downlink receptions, the terminal device may determine a second feedback codebook that is transmitted within the first time unit. Further, after determining the second feedback codebook, the terminal device may transmit the second feedback codebook to the network device within the first time unit.

Here, the terminal device may transmit feedback information of at least one dynamic scheduling PDSCH received inside a set of occasions for first downlink receptions to the network device through the second feedback codebook, thereby avoiding the system efficiency reduction caused by the feedback information of the dynamically configured PDSCH transmitted inside the set of occasions for first downlink receptions being discarded.

In the embodiments of the present disclosure, the terminal device may determine a second feedback codebook based on the first feedback codebook. Specifically, the terminal device may take the first feedback codebook as the second feedback codebook, or the first SPS PDSCH may be carried in the first feedback codebook to obtain the second feedback codebook.

In the method for determining the feedback codebook provided by the embodiments of the present disclosure, the terminal device may defer a transmission of the feedback information of the first SPS PDSCH to the first time unit. In addition, the terminal device may receive at least one dynamically configured PDSCH inside a set of occasions for first downlink receptions corresponding to the first time unit, and the set of occasions for first downlink receptions is used for determining a first feedback codebook. In this way, the terminal device may generate a second feedback codebook transmitted within the first time unit based on the first feedback codebook. That is, the terminal device can determine the second feedback codebook transmitted within the first time unit according to the first feedback codebook corresponding to the set of occasions for first downlink receptions, thereby avoiding a problem that the PDSCH feedback information is discarded due to the terminal device being unable to determine the feedback codebook of the first time unit, and improving the system efficiency.

In a possible implementation, a size of the second feedback codebook is equal to a size of the first feedback codebook.

In the embodiments of the present disclosure, the first feedback codebook may be a Type-1 feedback codebook corresponding to a set of occasions for first downlink receptions. That is, the size of the first feedback codebook is related to the total number of reception occasions contained in the set of occasions for first downlink receptions.

That is, the size of the second feedback codebook transmitted within the first time unit is related to the total number of reception occasions contained in the set of occasions for first downlink receptions. Exemplarily, the number of bits of the second feedback codebook is the total number of reception occasions contained in the set of occasions for first downlink receptions. Alternatively, the number of bits of the second feedback codebook is an integer multiple of the total number of reception occasions contained in the set of occasions for first downlink receptions.

In a possible implementation, the second feedback codebook further includes merged feedback information, the merged feedback information being obtained after the terminal device merges the feedback information of the first SPS PDSCH with feedback information of one SPS PDSCH in at least one second SPS PDSCH.

The first SPS PDSCH is received by the terminal device outside the set of occasions for first downlink receptions, and the at least one second SPS PDSCH is received by the terminal device inside the set of occasions for first downlink receptions.

That is, when the terminal device receives the first SPS PDSCH outside the set of occasions for first downlink receptions and at least one second SPS PDSCH inside the set of occasions for first downlink receptions, the terminal device may combine the feedback information of the first SPS PDSCH received outside the set of occasions for first downlink receptions with the second SPS PDSCH received inside the set of occasions for first downlink receptions to obtain merged feedback information, and carry the merged feedback information into the second feedback codebook. Thus, the terminal device may multiplex the feedback information of the PDSCH outside the set of occasions for first downlink receptions into the second feedback codebook for transmission.

Further, a field, occupied by the merged feedback information, in the second feedback codebook is determined according to a reception occasion, occupied by the one SPS PDSCH in the at least one second SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

Specifically, the first feedback codebook is a Type-1 feedback codebook corresponding to the set of occasions for first downlink receptions. That is, each field in the first feedback codebook has a one-to-one correspondence with each reception occasion in the set of occasions for first downlink receptions. Correspondingly, a mapping relationship between each field in the second feedback codebook and each reception occasion in the set of occasions for first downlink receptions is same as a mapping relationship between each field in the first feedback codebook and each reception occasion in the set of occasions for first downlink receptions. It can be understood that each field in the second feedback codebook has a one-to-one correspondence with each reception occasion in the set of occasions for first downlink receptions.

It should be noted that a field may be composed of one bit or multiple bits, which is not limited in the embodiments of the present disclosure.

Based on this, the terminal device may determine the field, occupied by the merged feedback information, in the second feedback codebook according to a reception occasion, occupied by one SPS PDSCH in the at least one second SPS PDSCH, in the set of occasions for first downlink receptions.

Exemplarily, as illustrated with reference to FIG. 6, a set of occasions for first downlink receptions corresponding to slot n+5 includes slot n+1 to slot n+4. The terminal device may merge the feedback information of the first SPS PDSCH received within the slot n with the feedback information of the second SPS PDSCH received in the slot n+1, and map the merged feedback information to a bit corresponding to slot n+1 in the Type-1 feedback codebook to obtain the second feedback codebook. The second feedback codebook may be {ACK/NACK _{merged feedback information}, ACK/NACK _{slot n+2}, ACK/NACK _{slot n+3}, ACK/NACK _{slot n+4}}.

In some embodiments, the number of second SPS PDSCH may be multiple. When the number of the second SPS PDSCH is multiple, the operation that the terminal device merges the feedback information of the first SPS PDSCH with the feedback information of the SPS PDSCH in the at least one second SPS PDSCH may be realized by the following steps.

In step a, the terminal device selects a target second SPS PDSCH meeting a first preset condition from a plurality of second SPS PDSCHs.

In step b, the terminal device merges the feedback information of the first SPS PDSCH with feedback information of the target second SPS PDSCH to obtain the merged feedback information.

In the embodiments of the present disclosure, the first preset condition includes any one of the following:
a time interval between the target second SPS PDSCH and the first SPS PDSCH is minimum;
the target second SPS PDSCH is an earliest second SPS PDSCH after the first SPS PDSCH;
configuration information of the target second SPS PDSCH is same as configuration information of the first SPS PDSCH;
the configuration information of the target second SPS PDSCH is the same as the configuration information of the first SPS PDSCH, and the time interval between the target second SPS PDSCH and the first SPS PDSCH is minimum; and
the configuration information of the target second SPS PDSCH is the same as configuration information of the first SPS PDSCH, and the target second SPS PDSCH is the earliest second SPS PDSCH after the first SPS PDSCH.

In some embodiments, the terminal device merging the feedback information of the two SPS PDSCHs may employ a proximity principle. That is, the terminal device may merge the first SPS PDSCH with a second SPS PDSCH, which has the minimum time interval with the first SPS PDSCH in the set of occasions for first downlink receptions. Alternatively, the terminal device may merge the first SPS PDSCH with an earliest second SPS PDSCH after the first SPS PDSCH.

Here, the time interval may be an interval between an ending OFDM symbol of the first SPS PDSCH and an ending OFDM symbol of the second SPS PDSCH, or an interval between a starting OFDM symbol of the first SPS PDSCH and a starting OFDM symbol of the second SPS PDSCH. Embodiments of the present disclosure are not limited thereto.

In other embodiments, the terminal device may merge feedback information of two SPS PDSCHs with same configuration. That is, the first SPS PDSCH and the target second SPS PDSCH are two PDSCH transmissions under the same static configuration information.

In addition, the terminal device may also combine the above two manners. That is, the terminal device may select a second SPS PDSCH, which has the same configuration as the first SPS PDSCH and is adjacent and nearest to the first SPS PDSCH to merge.

In some embodiments, a field corresponding to each reception occasion in the second feedback codebook may be a bit of data. It can be understood that both dynamic scheduling PDSCH and SPS PDSCH adopt single codeword transmission, that is, the single bit data is used to characterize whether the data transmitted within each reception occasion is successful or not.

Basis on this, "AND" logical processing is performed by the terminal device on the feedback information of the first SPS PDSCH and the feedback information of the target second SPS PDSCH, to obtain the merged feedback information.

In other embodiments, a field corresponding to each reception occasion in the second feedback codebook may be 2 bits of data. It is understood that dynamic scheduling PDSCH supports up to 2-codeword transmission, while SPS PDSCH uses single-codeword transmission.

Based on this, the terminal device merges two pieces of feedback information. Specifically, the feedback information of different SPS PDSCHs may be mapped to two bits corresponding to one occasion for candidate PDSCH reception in the Type-1 codebook.

Specifically, the terminal device may determine a value of the first bit in the merged feedback information based on the feedback information of the first SPS PDSCH, and determine a value of the second bit in the merged feedback information based on the feedback information of the target second SPS PDSCH, thereby obtaining the merged feedback information.

In the method for determining the feedback codebook provided by the embodiments of the present disclosure, the feedback information of the first SPS PDSCH outside the set of occasions for first downlink receptions is carried in the second feedback codebook and transmitted to the network device. The size of feedback codebook is unchanged, and the transmission reliability of feedback codebook is higher. Moreover, a demodulation performance of adjacent SPS PDSCHs in time domain is consistent, and the merging of feedback information will not have a great impact on the system efficiency.

In a possible implementation, in response to that a second preset condition is satisfied between the first SPS PDSCH and a PUCCH for transmitting feedback information in the first time unit, the second feedback codebook further includes the feedback information of the first SPS PDSCH.

The first SPS PDSCH is received by the terminal device inside the set of occasions for first downlink receptions, and the first time unit precedes the second time unit.

In the embodiments of the present disclosure, the second preset condition may be that the time interval between an ending OFDM symbol of the OFDM of the first SPS PDSCH and a starting symbol of the PUCCH for transmitting the feedback information in the first time unit is greater than or equal to a processing delay of the terminal device.

Here, the processing delay refers to the UE PDSCH processing procedure time. The processing delay is related to the processing capability of the terminal device, and different terminal device types may corresponds to different processing delays.

It will be understood that when receiving a first SPS PDSCH inside a set of occasions for first downlink receptions, the terminal device may determine a second time unit preconfigured for transmitting the feedback information of the first SPS PDSCH. If the first time unit corresponding to the set of occasions for first downlink receptions precedes the second time unit, the time interval between the ending OFDM symbol of the first SPS PDSCH and the starting OFDM symbol of the PUCCH for transmitting feedback information in the first time unit is calculated.

Further, if the time interval is greater than or equal to the processing delay of the terminal device, the terminal device may determine to carry the feedback information of the first SPS PDSCH into the second feedback codebook transmitted within the first time unit.

In the embodiments of the present disclosure, a field, occupied by the feedback information of the first SPS PDSCH, in the second feedback codebook may be determined according to a reception occasion, occupied by the first SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

Here, a mapping relationship between each field in the second feedback codebook and each reception occasion in the set of occasions for first downlink receptions is same as that in the first feedback codebook. That is, each field in the second feedback codebook has a one-to-one correspondence with each reception occasion in the set of occasions for first downlink receptions.

A field, occupied by the feedback information of the first SPS PDSCH, in the second feedback codebook is determined according to a reception occasion, occupied by the first SPS PDSCH in the set of occasions for first downlink receptions.

Based on this, the terminal device may determine the field, occupied by the feedback information of the first SPS PDSCH, in the second feedback codebook according to a reception occasion, occupied by the first SPS PDSCH in the set of occasions for first downlink receptions. It can be understood that in the implementation, the feedback information of the first SPS PDSCH is carried into the second feedback codebook, and the feedback information of the first SPS PDSCH does not occupy the new bits, but occupies bits corresponding to the original first SPS PDSCH reception occasions. That is, in the implementation, a size of the second feedback codebook is equal to a size of the first feedback codebook.

As an example, referring to the schematic diagram illustrated in FIG. 7, the terminal device receives the first SPS PDSCH in slot n+3. The feedback timing k₁ configured by the first SPS PDSCH is 2. The time unit preconfigured for transmitting the feedback information of the first SPS PDSCH may be determined as a slot n+5 according to the feedback timing k₁. The set of occasions for first downlink receptions corresponds to the slot n+4, i.e. the feedback information of each reception occasion in the set of occasions for first downlink receptions may be transmitted within the slot n+4.

If the time delay between the ending symbol of the first SPS PDSCH transmitted within slot n+3 and the starting symbol of PUCCH carrying the second feedback codebook in slot n+4 is greater than the processing delay, the second feedback codebook may be {ACK/NACK _{slot n}, ACK/NACK _{slot n+1}, ACK/NACK _{slot n+2}, ACK/NACK _{first SPS PDSCH}}.

To sum up, through the method for determining the feedback codebook provided by the embodiments of the present disclosure, the feedback information originally transmitted within the subsequent time unit can be transmitted in advance on the premise of ensuring the processing delay of the terminal device. In this way, the uplink control overhead in the system may be reduced. In addition, the deferring transmission of feedback information may be avoided.

In a possible implementation, the second feedback codebook is the first feedback codebook. The first SPS PDSCH is received by the terminal device outside the set of occasions for first downlink receptions.

In the embodiments of the present disclosure, the first feedback codebook is Type-1 feedback codebook corresponding to the set of occasions for first downlink receptions. That is, when the terminal device receives the first SPS PDSCH outside the set of occasions for first downlink receptions, the terminal device may directly use the first feedback codebook as the second feedback codebook for final transmission without transmitting the feedback information of the first SPS PDSCH. That is, the terminal device transmits only feedback information of the data received inside the set of occasions for first downlink receptions.

Exemplarily, as illustrated with reference to FIG. 6, a set of occasions for first downlink receptions corresponding to slot n+5 includes slot n+1 to slot n+4. The terminal device may receive feedback information of the first SPS PDSCH on slot n. The terminal device may directly generate a second feedback codebook based on the set of occasions for first downlink receptions, that is, the second feedback codebook may be {ACK/NACK _{second SPS PDSCH}, ACK/NACK _{slot n+2}, ACK/NACK _{slot n+3}, ACK/NACK _{slot n+4}}.

It can be seen that the method for determining the feedback codebook provided by the embodiments of the present disclosure does not affect the generation process of the existing Type-1 feedback codebook, and the implementation manner is the simplest.

In a possible implementation, the second feedback codebook may include the first feedback codebook and a third feedback codebook, the third feedback codebook including feedback information of at least one first SPS PDSCH. The at least one first SPS PDSCH is received by the terminal device outside the set of occasions for first downlink receptions.

In the embodiments provided by the present disclosure, the terminal device may directly cascade the feedback codebook inside the set of occasions for first downlink receptions with the feedback information corresponding to the SPS PDSCH received outside the set of occasions for first downlink receptions to obtain the second feedback codebook.

Specifically, the terminal device may generate a third feedback codebook based on at least one first SPS PDSCH received outside the set of occasions for first downlink receptions. In addition, the terminal device may generate a first feedback codebook based on the data received in the set of occasions for downlink receptions. Further, the first feedback codebook and the third feedback codebook are spliced together to obtain a second feedback codebook finally transmitted within the first time unit.

It can be understood that in the implementation, the PDSCH received outside the set of occasions for first downlink receptions and the PDSCH received inside the set of occasions for first downlink receptions are spliced to obtain a second feedback codebook, that is, the size of the second feedback codebook is larger than that of the first feedback codebook in the embodiments.

Exemplarily, as illustrated with reference to FIG. 6, a set of occasions for first downlink receptions corresponding to slot n+5 includes slot n+1 to slot n+4. The terminal device may receive feedback information of the first SPS PDSCH on slot n. The terminal device may obtain a third feedback codebook {ACK/NACK _{first SPS PDSCH}} based on the feedback information of the first SPS PDSCH received within the slot n. A first feedback codebook {ACK/NACK _{second SPS PDSCH}, ACK/NACK _{slot n+2}, ACK/NACK _{slot n+3}, ACK/NACK _{slot n+4}} is generated based on the set of occasions for first downlink receptions. The first feedback codebook and the third feedback codebook are spliced to obtain a second feedback codebook {ACK/NACK _{first SPS PDSCH}, ACK/NACK _{second SPS PDSCH}, ACK/NACK _{slot n+2}, ACK/NACK _{slot n+3}, ACK/NACK _{slot n+4}}.

It should be noted that the first feedback codebook may be located before or after the third feedback codebook in the embodiments of the present disclosure, which is not limited in the embodiments of the present disclosure.

It can be seen that feedback information of all downlink channels may be guaranteed to be transmitted in the embodiments of the present disclosure. That is, the feedback information of SPS PDSCH received outside the set of reception occasions is cascaded with the existing Type-1 feedback codebook, which makes the best use of the existing working mechanism and reduces the complexity of implementation.

The method provided by the present disclosure is described in detail in combination with specific application scenarios.

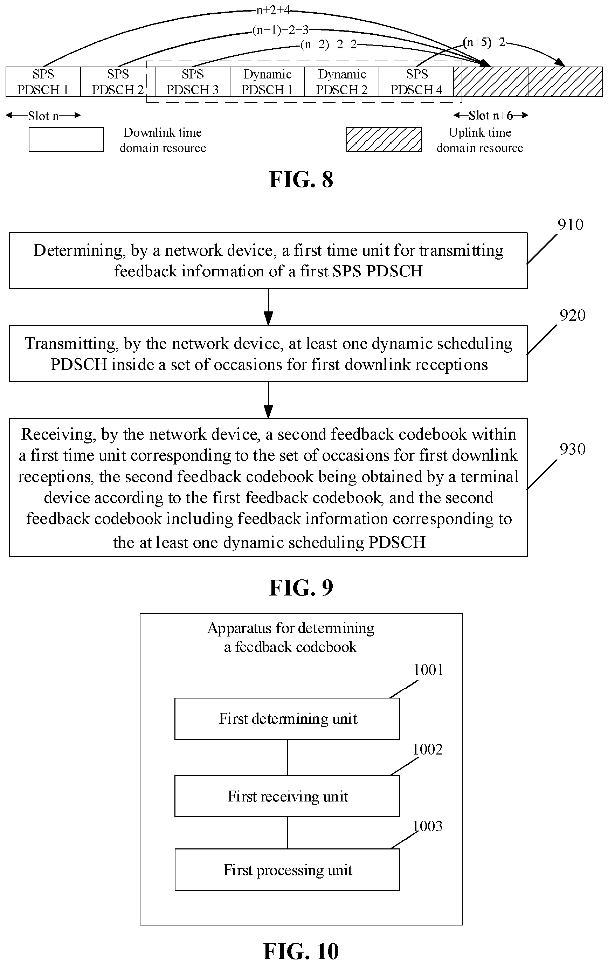

Referring to the schematic diagram illustrated in FIG. 8, the terminal device receives SPS PDSCH 1 within slot n, SPS PDSCH 2 within slot n+1, SPS PDSCH 3 within slot n+3, dynamic PDSCH 1 within slot n+4, and dynamic PDSCH 2 within slot n+5. In the slot structure illustrated in FIG. 8, slot n+6 and slot n+7 are uplink resources.

The feedback timing k₁ preconfigured by SPS PDSCH is 2. Each SPS PDSCH 1 to SPS PDSCH 3 corresponds to different k_{defer}. A k_{defer} value corresponding to SPS PDSCH 1 is 4, a k_{defer} value corresponding to SPS PDSCH 2 is 3, and a k_{defer} value corresponding to SPS PDSCH 3 is 2. That is, the terminal device may determine that feedback information of SPS PDSCH 1 to SPS PDSCH 3 is transmitted within the slot n+6 according to the preconfigured feedback timing k₁ and k_{defer}. In addition, the terminal device may determine that feedback information of the SPS PDSCH 4 is transmitted within slot n+7 based on the feedback timing k₁.

In addition, a set of occasions for first PDSCH receptions (which corresponds to the set of occasions for first downlink receptions described above) corresponding to slot n+6 includes slot n+2 to slot n+5. That is, feedback information of the dynamic PDSCH 1 and the dynamic PDSCH 2 is also transmitted within the slot n+6.

Based on the above scenario, the method for determining the feedback codebook transmitted within the slot n+6 is described in detail below.

### First embodiment

The terminal device may determine the Type-1 feedback codebook transmitted on slot n+6 based on the PDSCH included in the set of occasions for first PDSCH receptions directly.

Specifically, the Type-1 feedback codebook is: {ACK/NACK_{SPS3}, ACK/NACK_{dyn1}, ACK/NACK_{dyn2}, NACK}.

A feedback slot obtained by SPS PDSCH 4 according to preconfigured k₁ is slot n+7, so the ACK/NACK information corresponding to SPS PDSCH 4 is not fed back in slot n+6, that is, an NACK placeholder is set at the corresponding position of SPS PDSCH 4 in Type-1 feedback codebook.

The method for determining the feedback codebook provided by the embodiments of the present disclosure does not affect a generation process of the existing Type-1 feedback codebook, and the implementation manner is the simplest. The method may transmit part ACK/NACK information corresponding to the SPS discarded in R16 (e.g. feedback information of the SPS PDSCH). However, there is still a situation that the SPS ACK/NACK information is discarded.

### Second embodiment

The terminal device may merge the SPS PDSCH received outside the set of occasions for first PDSCH receptions with the SPS PDSCH received inside the set of occasions for first PDSCH receptions, and map the merged ACK/NACK information to the Type-1 feedback codebook.

Specifically, the terminal device may merge the SPS PDSCH 1 and SPS PDSCH 2 received outside the set of occasions for first PDSCH receptions with the feedback information of SPS PDSCH 3 received inside the set of occasions for first PDSCH receptions, and map them to a corresponding bit of SPS PDSCH 3 in the Type-1 feedback codebook.

The Type-1 feedback codebook may be: {ACK/NACK_{SPS1 & SPS2 & SPS3}, ACK/NACK_{dyn1}, ACK/NACK_{dyn2}, NACK}.

It should be noted that the proximity principle may be adopted when merging. That is, the SPS PDSCHs received outside the set of occasions for first PDSCH receptions is merged with an SPS PDSCH nearest to the SPS PDSCHs inside the set of occasions for first PDSCH receptions. Specifically, the SPS PDSCH outside the set of occasions for first PDSCH receptions may be merged with a SPS PDSCH which is inside the set of occasions for first PDSCH receptions and is after the SPS PDSCH, or merged with a SPS PDSCH which is inside the set of occasions for first PDSCH receptions and is before the SPS PDSCH, which is not limited herein.

In some embodiments, merging may be limited to the same SPS configuration. Referring to FIG. 8, if SPS PDSCH 1 and SPS PDSCH 3 are two PDSCH transmissions under the same SPS configuration, and SPS PDSCH 2 and SPS PDSCH 4 are two PDSCH transmissions under the same SPS configuration, then the Type-1 feedback codebook is {ACK/NACK_{SPS1 & SPS3}, ACK/NACK_{dyn1}, ACK/NACK_{dyn2}, ACK/NACK_{SPS2}}. The SPS PDSCH 4 is not fed back in the Type-1 feedback codebook, so feedback information of SPS PDSCH 2 does not need to be merged with feedback information of SPS PDSCH 4.

In other embodiments, each PDSCH reception occasion in the Type-1 feedback codebook corresponds to 2 bits of feedback information, i.e. the dynamic scheduling PDSCH supports a maximum of 2 codeword transmission, while the SPS PDSCH adopts a single codeword transmission. Based on this, the terminal device may map feedback information of different SPS PDSCHs to two bits corresponding to one occasion of candidate PDSCH reception in the Type-1 codebook.

Here, symbol (a, b) is used to correspond to one PDSCH candidate occasion in the feedback codebook, where a is a first bit corresponding to the PDSCH candidate occasion and b is a second bit corresponding to the PDSCH candidate occasion. Based on this, the feedback codebook of the slot n+6 illustrated in FIG. 8 may be:

{(ACK/NACK_{SPS1 & SPS2}, ACK/NACK_{SPS3}), (ACK/NACK_{dyn1}, _{TB1}, ACK/NACK_{dyn1}, _{TB2}), (ACK/NACK_{dyn1}, _{TB1}, ACK/NACK_{dyn1}, _{TB2}), (NACK, NACK)}. That is, SPS PDSCH 1 and SPS PDSCH 2 are combined and mapped to the first bit corresponding to SPS PDSCH 3. TB1 and TB2 denote different transport blocks, respectively.

The feedback codebook of the slot n+6 illustrated in FIG. 8 may be:
{(ACK/NACK_{SPS1}, ACK/NACK_{SPS3}), (ACK/NACK_{dyn1}, _{TB1}, ACK/NACK_{dyn1}, _{TB2}), (ACK/NACK_{dyn1}, _{TB1}, ACK/NACK_{dyn1}, _{TB2}), (ACK/NACK_{SPS2}, NACK)}. That is, under a principle of the same SPS configuration, SPS PDSCH 1 and SPS PDSCH 3 are merged, and SPS PDSCH 2 and SPS PDSCH 4 are merged.

To sum up, the feedback codebook in the embodiments has the same number of bits as feedback codebook in the related art. Therefore, the reliability of PUCCH transmission on slot n+6 is higher. Moreover, a demodulation performance of adjacent SPS PDSCHs in time domain is consistent, and the merging of ACK/NACK will not have a great impact on the system efficiency.

### Third embodiment

When receiving a static configuring SPS PDSCH 4 within the set of occasions for first PDSCH receptions, the terminal device may determine that the feedback information of the SPS PDSCH 4 is transmitted within the slot n+7 based on the feedback timing k₁. Moreover, slot n+6 corresponding to the set of occasions for first PDSCH receptions is located before slot n+7.

In this case, the terminal device may determine whether a processing delay is satisfied between an ending symbol of the SPS PDSCH 4 and a starting symbol of PUCCH carrying ACK/NACK information in the slot n+6. Here, the processing delay is the UE PDSCH processing procedure time.

If the processing delay is satisfied, feedback information of the SPS PDSCH 4 may be carried in the Type-1 feedback codebook transmitted within the slot n+6. If the processing delay is not satisfied, the feedback information of the SPS PDSCH 4 is transmitted within the slot n+7. Specifically, when the processing delay is satisfied, the Type-1 feedback codebook transmitted within the slot n+6 may be:
{ACK/NACK_{SPS3}, ACK/NACK_{dyn1}, ACK/NACK_{dyn2}, ACK/NACK_{SPS4}}.

In addition, if the processing delay is not satisfied, the Type-1 feedback codebook transmitted within the slot n+6 may be: {ACK/NACK_{SPS3}, ACK/NACK_{dyn1}, ACK/NACK_{dyn2}, NACK}.

That is to say, the embodiments of the present disclosure may guarantee the processing delay, and then the value of k_{defer} may be less than 0. Moreover, PUCCH is not needed to be transmitted within the slot n+7, which may reduce the uplink control overhead in the system. In addition, the deterring of ACK/NACK information may be avoided (for example, when slot n+7 is a downlink resource, SPS PDSCH 4 needs to be deferred), and the delay may be reduced.

### Fourth embodiment

The terminal device may directly cascade the feedback codebook in the set of occasions for first PDSCH receptions with the feedback information corresponding to the SPS PDSCH received outside the set of occasions for first PDSCH receptions and transmit it through slot n+6.

Specifically, the feedback codebook transmitted within the slot n+6 may include two parts, a first part is the Type-1 feedback codebook corresponding to the set of occasions for first PDSCH receptions (which may be generated according to the first and second embodiments), and a second part is the SPS PDSCH received outside the set of occasions for candidate PDSCH receptions and its feedback information is deferred to be transmitted within the slot n+6 for transmission.

As an example, the feedback codebook transmitted within slot n+6 may be {ACK/NACK_{SPS3}, ACK/NACK_{dyn1}, ACK/NACK_{dyn2}, NACK, ACK/NACK_{SPS1}, ACK/NACK_{SPS2}} or {ACK/NACK_{SPS3}, ACK/NACK_{dyn1}, ACK/NACK_{dyn2}, ACK/NACK_{SPS4}, ACK/NACK_{SPS1}, ACK/NACK_{SPS2}}.

It should be noted that in the embodiments, the first part may be located before or after the second part, which is not limited in the embodiments of the present disclosure.

It can be seen that feedback information of all downlink channels may be guaranteed to be transmitted in the embodiments of the present disclosure. That is, the feedback information of SPS PDSCH received outside the set of reception occasions is cascaded with the existing Type-1 feedback codebook level, which makes the best use of the existing working mechanism and reduces a complexity of implementation.

Based on the above implementation, embodiments of the present disclosure further provide a method for determining a feedback codebook, which may be applied to a network device 420 in the communication system architecture illustrated in FIG. 4. Specifically, referring to the schematic flowchart illustrated in FIG. 9, the method for determining the feedback codebook provided by the embodiments of the present disclosure may include the following operations.

At block 910, the network device determines a first time unit for transmitting feedback information of a first SPS PDSCH.

A time unit preconfigured for transmitting the feedback information of the first SPS PDSCH is a second time unit, and the first time unit is different from the second time unit.

In the embodiments of the present disclosure, the network device may determine a second time unit preconfigured for transmitting the feedback information of the first SPS PDSCH based on the feedback timing.

Here, when transmitting the first SPS PDSCH within the slot n, the network device may determine the second time unit for receiving the feedback information of the first SPS PDSCH as a slot n+k₁ according to a preconfigured feedback timing k₁.

In the embodiments of the present disclosure, a resource for transmitting the PUCCH within the second time unit preconfigured for transmitting the feedback information of the first SPS PDSCH is limited.

The resource for transmitting the PUCCH within the second time unit being limited includes:
a time domain symbol occupied by the PUCCH for transmitting the feedback information of the first SPS PDSCH within the second time unit including at least one of:
a downlink symbol, a flexible symbol or a time domain symbol occupied by a synchronization signal or a broadcast channel.

It will be understood that the second time unit preconfigured for transmitting the feedback information of the first SPS PDSCH fails to be used for transmitting the first SPS PDSCH feedback information because the second time unit is configured for other purposes (e.g. transmitting downlink data, transmitting synchronization signals, or transmitting broadcast signals).

Based on this, the network device may determine to receive the first SPS PDSCH feedback information at the first time unit.

In the embodiments of the present disclosure, the network device may determine the first time unit according to the feedback timing k₁ and a deferred time offset value k_{defer}. Specifically, when transmitting the first SPS PDSCH within the slot n, the network device may determine that the feedback information of the first SPS PDSCH is received within the slot n+k₁ + k_{defer}, that is, the first time unit is the slot n+k₁ + k_{defer}.

It should be noted that the deferred time offset value k_{defer} may be configured by the network device or may be a value agreed between the terminal device and the network device, and the embodiments of the present disclosure does not limit the source of the deferred time offset value k_{defer}.

At block 920, the network device transmits at least one dynamic scheduling PDSCH inside a set of occasions for first downlink receptions corresponding to the first time unit.

The set of occasions for first downlink receptions is used for determining a first feedback codebook.

The network device may transmit the dynamic scheduling PDSCH to the terminal device in the set of occasions for first downlink receptions and indicate the first time unit corresponding to the set of occasions for first downlink receptions to the terminal device. For example, the network device may indicate a PUCCH for transmitting feedback information of data in the set of occasions for first downlink receptions through the DCI.

In the embodiments of the present disclosure, the set of occasions for first downlink receptions is used for determining a first feedback codebook. It will be understood that the first feedback codebook is generated by the terminal device based on the downlink data, which is received by the terminal device within each reception occasion inside the set of first reception occasions.

That is, the first feedback codebook may be a Type-1 feedback codebook corresponding to the set of occasions for first downlink receptions. That is, a size of the first feedback codebook is related to the total number of reception occasions contained in the set of occasions for first downlink receptions. Each reception occasion in the set of occasions for first downlink receptions corresponds to one bit in the first feedback codebook, or each reception occasion in the set of occasions for first downlink receptions corresponds to a fixed number of bits (e.g. two bits) in the first feedback codebook.

It should be noted that the operation 920 may be performed before the operation 910, may be performed after the operation 910, or may be performed simultaneously with the operation 910. Embodiments of the present disclosure do not limit the order of execution of the operations 910 and 920.

At block 930, the network device receives a second feedback codebook within a first time unit corresponding to the set of occasions for first downlink receptions.

The second feedback codebook is obtained by a terminal device according to the first feedback codebook, and the second feedback codebook includes feedback information corresponding to the at least one dynamic scheduling PDSCH.

The network device may receive the second feedback codebook and determine a specific composition of the second feedback codebook, thereby determining whether the transmitted PDSCH is correct.

In a possible implementation, a size of the second feedback codebook is equal to a size of the first feedback codebook.

In a possible implementation, the second feedback codebook further includes merged feedback information, the merged feedback information being obtained after merging the feedback information of the first SPS PDSCH with feedback information of one SPS PDSCH in at least one second SPS PDSCH.

The first SPS PDSCH is transmitted by the network device outside the set of occasions for first downlink receptions, and the at least one second SPS PDSCH is transmitted by the network device inside the set of occasions for first downlink receptions.

In the implementation, a size of the second feedback codebook is equal to a size of the first feedback codebook.

It can be understood that when the network device transmits the first SPS PDSCH outside the set of occasions for first downlink receptions and transmits at least one second SPS PDSCH inside the set of occasions for first downlink receptions, the merged feedback information of the first SPS PDSCH and a second SPS PDSCH may be obtained from the second feedback codebook.

In some embodiments, a field, occupied by the merged feedback information, in the second feedback codebook is determined according to a reception occasion, occupied by the one SPS PDSCH in the at least one second SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

In the embodiments of the present disclosure, a mapping relationship between each field in the second feedback codebook and each reception occasion in the set of occasions for first downlink receptions is same as a mapping relationship between each field in the first feedback codebook and each reception occasion in the set of occasions for first downlink receptions. That is, each field in the second feedback codebook may correspond to each reception occasion in the set of occasions for first downlink receptions one by one.

Based on this, the network device may obtain merged feedback information in a field corresponding to a reception occasion occupied by one of the at least one second SPS PDSCH in the second feedback codebook.

In a possible implementation, when a number of the second SPS PDSCH is multiple, the merged feedback information being obtained by merging the feedback information of the first SPS PDSCH with the feedback information of the SPS PDSCH in the at least one second SPS PDSCH includes that:
the merged feedback information is obtained by merging the feedback information of the first SPS PDSCH with feedback information of the target second SPS PDSCH in a plurality of second SPS PDSCHs;
the target second SPS PDSCH is a second SPS PDSCH meeting a first preset condition among the plurality of second SPS PDSCHs.

In a possible implementation, the first preset condition includes any one of the following:
a time interval between the target second SPS PDSCH and the first SPS PDSCH is minimum;
the target second SPS PDSCH is an earliest second SPS PDSCH after the first SPS PDSCH;
configuration information of the target second SPS PDSCH is same as configuration information of the first SPS PDSCH;
the configuration information of the target second SPS PDSCH is the same as the configuration information of the first SPS PDSCH, and the time interval between the target second SPS PDSCH and the first SPS PDSCH is minimum; and
the configuration information of the target second SPS PDSCH is the same as configuration information of the first SPS PDSCH, and the target second SPS PDSCH is the earliest second SPS PDSCH after the first SPS PDSCH.

It can be understood that the network device may determine the target second SPS PDSCH from the plurality of second SPS PDSCHs, then the feedback information of the first SPS PDSCH and the target second SPS PDSCH is parsed from a field corresponding to reception occasions occupied by set of occasions for first downlink receptions based on the target second SPS PDSCH.

In some embodiments, a field corresponding to each reception occasion in the second feedback codebook may be a bit of data. It can be understood that both dynamic scheduling PDSCH and SPS PDSCH adopt single codeword transmission, that is, the single bit data is used to characterize whether the data transmitted within each reception occasion is successful or not.

Basis on this, the merged feedback information is a value obtained by performing "AND" logical processing on the feedback information of the first SPS PDSCH and feedback information of the target second SPS PDSCH.

In other embodiments, a field corresponding to each reception occasion in the second feedback codebook may be 2 bits of data. It is understood that dynamic scheduling PDSCH supports up to 2-codeword transmission, while SPS PDSCH uses single-codeword transmission.

Based on this, the network device may determine the feedback information of the first SPS PDSCH based on the value of the first bit in the merged feedback information, and determine the feedback information of the target second SPS PDSCH based on the value of the second bit in the merged feedback information.

In the method for determining the feedback codebook provided by the embodiments of the present disclosure, the feedback information of the first SPS PDSCH outside the set of occasions for first downlink receptions is carried in the second feedback codebook and transmitted to the network device. The size of feedback codebook is unchanged, and the transmission reliability of feedback codebook is higher. Moreover, a demodulation performance of adjacent SPS PDSCHs in time domain is consistent, and the merging of feedback information will not have a great impact on the system efficiency.

In a possible implementation, in response to that a second preset condition is satisfied between the first SPS PDSCH and a physical uplink control channel (PUCCH) for transmitting feedback information in the first time unit, the second feedback codebook further includes the feedback information of the first SPS PDSCH. The first SPS PDSCH is transmitted by the network device inside the set of occasions for first downlink receptions, and the first time unit precedes the second time unit.

In the embodiments of the present disclosure, the second preset condition may be that the time interval between an ending OFDM symbol of the OFDM of the first SPS PDSCH and a starting symbol of the PUCCH for transmitting the feedback information in the first time unit is greater than or equal to a processing delay of the terminal device.

Specifically, the network device may transmit the first SPS PDSCH inside the set of occasions for first downlink receptions. The network device may determine a second time unit preconfigured for transmitting the feedback information of the first SPS PDSCH. If the first time unit corresponding to the set of occasions for first downlink receptions precedes the second time unit, the time interval between the ending OFDM symbol of the first SPS PDSCH and the starting OFDM symbol of the PUCCH for transmitting feedback information in the first time unit is calculated.

Further, if the time interval is greater than or equal to the processing delay of the terminal device, the network device may determine the feedback information of the first SPS PDSCH carried in the received second feedback codebook. The network device may parse the second feedback codebook to obtain the feedback information of the first SPS PDSCH.

In some embodiments, a field, occupied by the feedback information of the first SPS PDSCH, in the second feedback codebook is determined according to a reception occasion, occupied by the first SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

Here, a mapping relationship between each field in the second feedback codebook and each reception occasion in the set of occasions for first downlink receptions is same as that in the first feedback codebook. That is, each field in the second feedback codebook has a one-to-one correspondence with each reception occasion in the set of occasions for first downlink receptions.

A field, occupied by the feedback information of the first SPS PDSCH, in the second feedback codebook is determined according to a reception occasion, occupied by the first SPS PDSCH in the set of occasions for first downlink receptions.

Based on this, the network device may determine the field, occupied by the the feedback information of the first SPS PDSCH, in the second feedback codebook according to a reception occasion, occupied by the first SPS PDSCH in the set of occasions for first downlink receptions.

To sum up, through the method for determining the feedback codebook provided by the embodiments of the present disclosure, the feedback information originally transmitted within the subsequent time unit can be transmitted in advance on the premise of ensuring the processing delay of the terminal device. In this way, the uplink control overhead in the system may be reduced. In addition, the deferring transmission of feedback information may be avoided.

In a possible implementation, the second feedback codebook may be the first feedback codebook. The first SPS PDSCH is transmitted by the network device outside the set of occasions for first downlink receptions.

In the embodiments of the present disclosure, the first feedback codebook is Type-1 feedback codebook corresponding to the set of occasions for first downlink receptions. That is, when the network device transmits the first SPS PDSCH outside the set of occasions for first downlink receptions, the network device may directly use the first feedback codebook as the second feedback codebook for final transmission without transmitting the feedback information of the first SPS PDSCH. That is, the second feedback codebook contains only feedback information of the data received inside the set of occasions for first downlink receptions.

It can be seen that the method for determining the feedback codebook provided by the embodiments of the present disclosure does not affect the generation process of the existing Type-1 feedback codebook, and the implementation manner is the simplest.

In a possible implementation, the second feedback codebook includes the first feedback codebook and a third feedback codebook, the third feedback codebook including feedback information of at least one first SPS PDSCH. The at least one first SPS PDSCH is transmitted by the network device outside the set of occasions for first downlink receptions.

It can be understood that the second feedback codebook may include feedback information of all the first SPS PDSCH outside the set of occasions for first downlink receptions and feedback information of dynamically configured SPS PDSCH inside the set of occasions for first downlink receptions.

Specifically, the network device may first split the second feedback codebook and determine the first feedback codebook and the third feedback codebook. The feedback information of dynamically configured SPS PDSCH inside the set of occasions for first downlink receptions is determined based on the first feedback codebook, and the feedback information of all the first SPS PDSCH outside the set of occasions for first downlink receptions is determined based on the third feedback codebook.

It should be noted that the first feedback codebook may be located before or after the third feedback codebook in the embodiments of the present disclosure, which is not limited in the embodiments of the present disclosure.

It can be seen that feedback information of all downlink channels may be guaranteed to be transmitted in the embodiments of the present disclosure. That is, the feedback information of SPS PDSCH received outside the set of reception occasions is cascaded with the existing Type-1 feedback codebook, which makes the best use of the existing working mechanism and reduces the complexity of implementation.

An embodiment of the present disclosure further provides an apparatus for determining a feedback codebook. The apparatus may be applied to the terminal device of the above embodiments. FIG. 10 is the structural diagram of the apparatus for determining the feedback codebook, and the apparatus for determining the feedback codebook includes a first determining unit 1001, a first receiving unit 1002 and a first processing unit 1003.

The first determining unit 1001 is configured to determine a first time unit for transmitting feedback information of a first semi persistent scheduling (SPS) physical downlink shared channel (PDSCH). A time unit preconfigured for transmitting the feedback information of the first SPS PDSCH is a second time unit, and the first time unit is different from the second time unit.

The first receiving unit 1002 is configured to receive at least one dynamic scheduling PDSCH inside a set of occasions for first downlink receptions corresponding to the first time unit. The set of occasions for first downlink receptions is used for determining a first feedback codebook.

The first processing unit 1003 is configured to determine a second feedback codebook that is transmitted within the first time unit. The second feedback codebook is obtained according to the first feedback codebook, and the second feedback codebook includes the at least one dynamic scheduling PDSCH.

In some embodiments, a size of the second feedback codebook is equal to a size of the first feedback codebook.

In some embodiments, the second feedback codebook further includes merged feedback information, the merged feedback information being obtained after the terminal device merges the feedback information of the first SPS PDSCH with feedback information of one SPS PDSCH in at least one second SPS PDSCH. The first SPS PDSCH is received by the terminal device outside the set of occasions for first downlink receptions, and the at least one second SPS PDSCH is received by the terminal device inside the set of occasions for first downlink receptions.

In some embodiments, a field, occupied by the merged feedback information, in the second feedback codebook is determined according to a reception occasion, occupied by the one SPS PDSCH in the at least one second SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

In some embodiments, when a number of the second SPS PDSCH is multiple, the operation that the terminal device merges the feedback information of the first SPS PDSCH with the feedback information of the SPS PDSCH in the at least one second SPS PDSCH includes:
the terminal device selects a target second SPS PDSCH meeting a first preset condition from a plurality of second SPS PDSCHs; and
the terminal device merges the feedback information of the first SPS PDSCH with feedback information of the target second SPS PDSCH to obtain the merged feedback information.

In some embodiments, the first preset condition includes any one of the following:
a time interval between the target second SPS PDSCH and the first SPS PDSCH is minimum;
the target second SPS PDSCH is an earliest second SPS PDSCH after the first SPS PDSCH;
configuration information of the target second SPS PDSCH is same as configuration information of the first SPS PDSCH;
the configuration information of the target second SPS PDSCH is the same as the configuration information of the first SPS PDSCH, and the time interval between the target second SPS PDSCH and the first SPS PDSCH is minimum; and
the configuration information of the target second SPS PDSCH is the same as configuration information of the first SPS PDSCH, and the target second SPS PDSCH is the second SPS PDSCH after the first SPS PDSCH.

In some embodiments, in response to that a second preset condition is satisfied between the first SPS PDSCH and a physical uplink control channel (PUCCH) for transmitting feedback information in the first time unit, the second feedback codebook further includes the feedback information of the first SPS PDSCH. The first SPS PDSCH is received by the terminal device inside the set of occasions for first downlink receptions, and the first time unit precedes the second time unit.

In some embodiments, a field, occupied by the feedback information of the first SPS PDSCH, in the second feedback codebook is determined according to a reception occasion, occupied by the first SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

In some embodiments, the second feedback codebook is the first feedback codebook. The first SPS PDSCH is received by the terminal device outside the set of occasions for first downlink receptions.

In some embodiments, the second feedback codebook includes the first feedback codebook and a third feedback codebook, the third feedback codebook including feedback information of at least one first SPS PDSCH. The at least one first SPS PDSCH is received by the terminal device outside the set of occasions for first downlink receptions.

In some embodiments, a resource for transmitting a PUCCH within the second time unit is limited.

In some embodiments, the resource for transmitting the PUCCH within the second time unit being limited includes:
a time domain symbol occupied by the PUCCH for transmitting the feedback information of the first SPS PDSCH in the second time unit including at least one of:
a downlink symbol, a flexible symbol or a time domain symbol occupied by a synchronization signal or a broadcast channel.

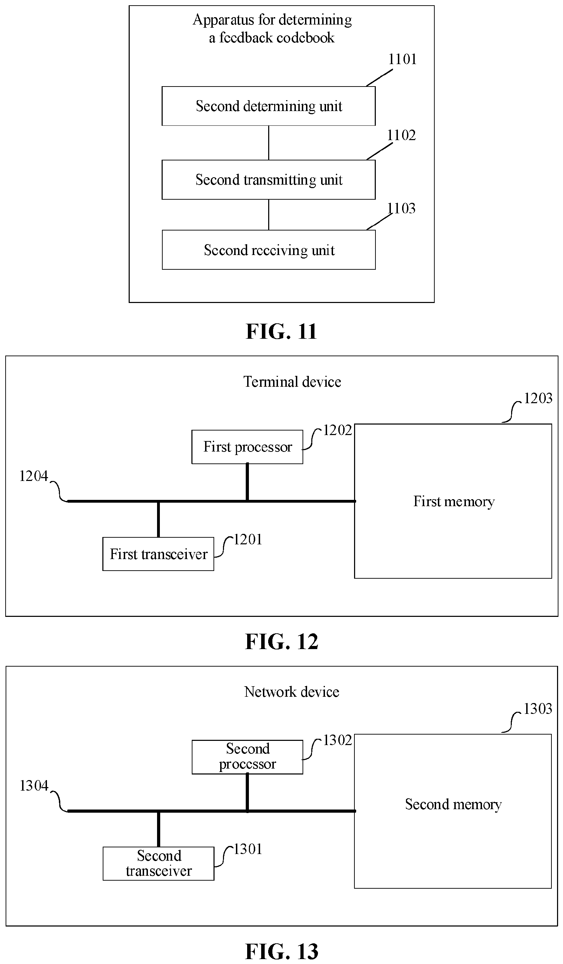

An embodiment of the present disclosure further provides an apparatus for determining the feedback codebook, and the apparatus may be applied to the network device of the above embodiment. FIG. 11 is a structural diagram of the apparatus for determining the feedback codebook, and the apparatus for determining the feedback codebook includes a second determining unit 1101, a second transmitting unit 1102 and a second receiving unit 1103.

The second determining unit 1101 is configured to determine a first time unit for transmitting feedback information of a first SPS PDSCH. A time unit preconfigured for transmitting the feedback information of the first SPS PDSCH is a second time unit, and the first time unit is different from the second time unit;

The second transmitting unit 1102 is configured to transmit at least one dynamic scheduling PDSCH inside a set of occasions for first downlink receptions. The set of occasions for first downlink receptions is used for determining a first feedback codebook.

The second receiving unit 1103 is configured to receive a second feedback codebook within a first time unit corresponding to the set of occasions for first downlink receptions. The second feedback codebook is obtained by a terminal device according to the first feedback codebook, and the second feedback codebook includes feedback information corresponding to the at least one dynamic scheduling PDSCH.

In some embodiments, a size of the second feedback codebook is equal to a size of the first feedback codebook.

In some embodiments, the second feedback codebook further includes merged feedback information, the merged feedback information is obtained by merging the feedback information of the first SPS PDSCH with feedback information of one SPS PDSCH in at least one second SPS PDSCH. The first SPS PDSCH is transmitted by the network device outside the set of occasions for first downlink receptions, and the at least one second SPS PDSCH is transmitted by the network device inside the set of occasions for first downlink receptions.

In some embodiments, a field, occupied by the merged feedback information, in the second feedback codebook is determined according to a reception occasion, occupied by the one SPS PDSCH in the at least one second SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

In some embodiments, when a number of the second SPS PDSCH is multiple, the merged feedback information being obtained by merging the feedback information of the first SPS PDSCH with the feedback information of the SPS PDSCH in the at least one second SPS PDSCH includes that:

the merged feedback information is obtained by merging the feedback information of the first SPS PDSCH with feedback information of the target second SPS PDSCH in a plurality of second SPS PDSCHs;
the target second SPS PDSCH is a second SPS PDSCH meeting a first preset condition among the plurality of second SPS PDSCHs.

In some embodiments, the first preset condition includes any one of the following:
a time interval between the target second SPS PDSCH and the first SPS PDSCH is minimum;
the target second SPS PDSCH is an earliest second SPS PDSCH after the first SPS PDSCH;
configuration information of the target second SPS PDSCH is same as configuration information of the first SPS PDSCH;
the configuration information of the target second SPS PDSCH is the same as the configuration information of the first SPS PDSCH, and the time interval between the target second SPS PDSCH and the first SPS PDSCH is minimum; and
the configuration information of the target second SPS PDSCH is the same as configuration information of the first SPS PDSCH, and the target second SPS PDSCH is the second SPS PDSCH after the first SPS PDSCH.

In some embodiments, in response to that a second preset condition is satisfied between the first SPS PDSCH and a physical uplink control channel (PUCCH) for transmitting feedback information in the first time unit, the second feedback codebook further includes the feedback information of the first SPS PDSCH. The first SPS PDSCH is transmitted by the network device inside the set of occasions for first downlink receptions, and the first time unit precedes the second time unit.

In some embodiments, a field, occupied by the feedback information of the first SPS PDSCH, in the second feedback codebook is determined according to a reception occasion, occupied by the first SPS PDSCH, in the set of occasions for first downlink receptions. A mapping relationship between each field in the second feedback codebook and each reception occasion in the set of occasions for first downlink receptions is same as a mapping relationship between each field in the first feedback codebook and each reception occasion in the set of occasions for first downlink receptions.

In some embodiments, the second feedback codebook is the first feedback codebook. The first SPS PDSCH is received by the terminal device outside the set of occasions for first downlink receptions.

In some embodiments, the second feedback codebook includes the first feedback codebook and a third feedback codebook, the third feedback codebook including feedback information of at least one first SPS PDSCH. The at least one first SPS PDSCH is transmitted by the network device outside the set of occasions for first downlink receptions.

In some embodiments, a resource for transmitting a PUCCH within the second time unit is limited.

In some embodiments, the resource for transmitting within the second time unit being limited includes:
a time domain symbol occupied by the PUCCH for transmitting the feedback information of the first SPS PDSCH in the second time unit including at least one of:
a downlink symbol, a flexible symbol or a time domain symbol occupied by a synchronization signal or a broadcast channel.

It should be noted that each functional unit in embodiments of the present disclosure may be integrated in one processing module, each unit may exist physically alone, or two or more units may be integrated in one module. The above integrated module may be implemented in the form of hardwares or software functional modules.

If an integrated module is implemented in the form of a software functional module and is not sold or used as a stand-alone product, the integrated unit may be stored in a computer readable storage medium. Based on this understanding, the technical solutions of the embodiments of the present disclosure, in essence or the part contributing to the prior art, or the whole or part of the technical solutions can be embodied in the form of a software product. The computer software product is stored in a storage medium, and includes several instructions so that a computer device (which may be a personal computer, a server, a network device or the like) or a processor implements all or part of the method according to respective embodiments of the present disclosure. The aforementioned storage medium includes various media capable of storing a program code such as a USB disk, a mobile hard drive disk, a read-only memory (ROM), a random access memory (RAM), a magnetic disk or an optical disk.

Based on the foregoing embodiments, another embodiment of the present disclosure also provides a terminal device. As illustrated in FIG. 12, the terminal device provided in the embodiments of the present disclosure may include: a first transceiver 1201, a first processor 1202, a first memory 1203 storing instructions executable by the first processor 1202.

The first transceiver 1201, the first processor 1202 and the first memory 1203 communicate through a first communication bus 1204.

The first processor 1202 is configured to execute, when running the computer program stored in the first memory 1203, the following instruction: determining a first time unit for transmitting feedback information of a first SPS PDSCH. A time unit preconfigured for transmitting the feedback information of the first SPS PDSCH is a second time unit, and the first time unit is different from the second time unit;

The first transceiver 1201 is configured to execute, when running the computer program stored in the first memory 1203, the following instruction: receiving at least one dynamic scheduling PDSCH inside a set of occasions for first downlink receptions corresponding to the first time unit, The set of occasions for first downlink receptions is used for determining a first feedback codebook.

The first processor 1202 is further configured to execute, when running the computer program stored in the first memory 1203, the following instruction: determining a second feedback codebook that is transmitted within the first time unit. The second feedback codebook is obtained according to the first feedback codebook, and the second feedback codebook includes feedback information corresponding to the at least one dynamic scheduling PDSCH.

Based on the foregoing embodiments, another embodiment of the present disclosure also provides a network device. As illustrated in FIG. 13, the network device provided in the embodiments of the present disclosure may include: a second transceiver 1301, a second processor 1302, a second memory 1303 storing instructions executable by the second processor 1302.

The second transceiver 1301, the second processor 1302 and the second memory 1303 communicate through a second communication bus 1304.

The second processor 1302 is configured to execute, when running the computer program stored in the second memory 1303, the following instruction: determining a first time unit for transmitting feedback information of a first SPS PDSCH. A time unit preconfigured for transmitting the feedback information of the first SPS PDSCH is a second time unit, and the first time unit is different from the second time unit.

The second transceiver 1301 is configured to execute, when running the computer program stored in the second memory 1303, the following instruction: transmitting at least one dynamic scheduling PDSCH inside a set of occasions for first downlink receptions, the set of occasions for first downlink receptions being used for determining a first feedback codebook; and receiving a second feedback codebook within a first time unit corresponding to the set of occasions for first downlink receptions, the second feedback codebook being obtained by a terminal device according to the first feedback codebook, and the second feedback codebook including feedback information corresponding to the at least one dynamic scheduling PDSCH.

It will be appreciated that the memory in the embodiments of the present disclosure may be a volatile memory or a non-volatile memory, or may also include both a volatile memory and a non-volatile memory. The non-volatile memory may be read only memory (ROM), programmable read-only memory (PROM), erasable programmable read-only memory (EPROM), electrically erasable programmable read-only memory (EEPROM), magnetic random access memory (FRAM), flash memory, magnetic surface memory, Optical Disk, or Compact Disc Read-Only Memory (CD-ROM). The magnetic surface memory may be disk storage or magnetic tape memory. The volatile memory may be a random access memory (RAM), which serves as an external cache. By way of illustration but not limitation, many forms of RAM are available, for example, static random access memory (SRAM), synchronous static random access memory (SSRAM), dynamic random access memory (DRAM), synchronous dynamic random access memory (SDRAM), double data rate synchronous dynamic random access memory (DDRSDRAM), Double Data Rate Synchronous Dynamic Random Access Memory), enhanced synchronous dynamic random access memory (ESDRAM), syncLink dynamic random access memory (SLDRAM), direct rambus random access memory (DRRAM). The memory described in embodiments of the present disclosure is intended to include but not limited to these and any other suitable types of memory.

In an embodiment of the present disclosure, there is further provided a computer storage medium, in particular to a computer-readable storage medium. A computer instruction is stored thereon. As a first embodiment, when the computer storage medium is located at the terminal and the computer instructions are executed by the processor, any operation in the method for determining the feedback codebook of the embodiments of the present disclosure is realized.

It should be understood that in various embodiments of the present disclosure, the size of the sequence number of the above-mentioned processes does not mean the order of execution, and the execution order of each process should be determined by its function and inherent logic, and should not be limited in any way to the implementation process of the embodiments of the present disclosure.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repeated herein.

In several embodiments provided herein, it should be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, each functional unit in each embodiment of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure, in essence or the part contributing to the prior art, or part of the technical solutions may be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a Read-Only Memory (ROM), a Random Access Memory (RAM), a magnetic disk or an optical disk.

The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

## Claims

1. A method for determining a feedback codebook, comprising:
determining, by a terminal device, a first time unit for transmitting feedback information of a first semi persistent scheduling (SPS) physical downlink shared channel (PDSCH), wherein a time unit preconfigured for transmitting the feedback information of the first SPS PDSCH is a second time unit, and the first time unit is different from the second time unit;
receiving, by the terminal device, at least one dynamic scheduling PDSCH inside a set of occasions for first downlink receptions corresponding to the first time unit, wherein the set of occasions for first downlink receptions is used for determining a first feedback codebook; and
determining, by the terminal device, a second feedback codebook that is transmitted within the first time unit, wherein the second feedback codebook is obtained according to the first feedback codebook, and the second feedback codebook comprises feedback information corresponding to the at least one dynamic scheduling PDSCH.

2. The method of claim 1, wherein a size of the second feedback codebook is equal to a size of the first feedback codebook.

3. The method of claim 2, wherein
the second feedback codebook further comprises merged feedback information, the merged feedback information being obtained after the terminal device merges the feedback information of the first SPS PDSCH with feedback information of one SPS PDSCH in at least one second SPS PDSCH, wherein the first SPS PDSCH is received by the terminal device outside the set of occasions for first downlink receptions, and the at least one second SPS PDSCH is received by the terminal device inside the set of occasions for first downlink receptions.

4. The method of claim 3, wherein
a field, occupied by the merged feedback information, in the second feedback codebook is determined according to a reception occasion, occupied by the one SPS PDSCH in the at least one second SPS PDSCH, in the set of occasions for first downlink receptions, wherein a mapping relationship between each field in the second feedback codebook and each reception occasion in the set of occasions for first downlink receptions is same as a mapping relationship between each field in the first feedback codebook and each receiving occasion in the set of occasions for first downlink receptions.

5. The method of claim 3 or 4, wherein when a number of the second SPS PDSCH is multiple, the terminal device merging the feedback information of the first SPS PDSCH with the feedback information of the SPS PDSCH in the at least one second SPS PDSCH comprises:
selecting, by the terminal device, a target second SPS PDSCH meeting a first preset condition from a plurality of second SPS PDSCHs; and
merging, by the terminal device, the feedback information of the first SPS PDSCH with feedback information of the target second SPS PDSCH to obtain the merged feedback information.

6. The method of claim 5, wherein the first preset condition comprises any one of the following:
a time interval between the target second SPS PDSCH and the first SPS PDSCH is minimum;
the target second SPS PDSCH is an earliest second SPS PDSCH after the first SPS PDSCH;
configuration information of the target second SPS PDSCH is same as configuration information of the first SPS PDSCH;
the configuration information of the target second SPS PDSCH is the same as the configuration information of the first SPS PDSCH, and the time interval between the target second SPS PDSCH and the first SPS PDSCH is minimum; and
the configuration information of the target second SPS PDSCH is the same as configuration information of the first SPS PDSCH, and the target second SPS PDSCH is the earliest second SPS PDSCH after the first SPS PDSCH.

7. The method of claim 2, wherein
in response to that a second preset condition is satisfied between the first SPS PDSCH and a physical uplink control channel (PUCCH) for transmitting feedback information in the first time unit, the second feedback codebook further comprises the feedback information of the first SPS PDSCH, wherein the first SPS PDSCH is received by the terminal device inside the set of occasions for first downlink receptions, and the first time unit precedes the second time unit.

8. The method of claim 7, wherein
a field, occupied by the feedback information of the first SPS PDSCH, in the second feedback codebook is determined according to a reception occasion, occupied by the first SPS PDSCH, in the set of occasions for first downlink receptions, wherein a mapping relationship between each field in the second feedback codebook and each reception occasion in the set of occasions for first downlink receptions is same as a mapping relationship between each field in the first feedback codebook and each reception occasion in the set of occasions for first downlink receptions.

9. The method of claim 2, wherein
the second feedback codebook is the first feedback codebook, and wherein the first SPS PDSCH is received by the terminal device outside the set of occasions for first downlink receptions.

10. The method of claim 1, wherein
the second feedback codebook comprises the first feedback codebook and a third feedback codebook, the third feedback codebook comprising feedback information of at least one first SPS PDSCH, and wherein the at least one first SPS PDSCH is received by the terminal device outside the set of occasions for first downlink receptions.

11. The method of any one of claims 1 to 10, wherein a resource for transmitting a PUCCH within the second time unit is limited.

12. The method of claim 11, wherein the resource for transmitting the PUCCH within the second time unit being limited comprises:
a time domain symbol occupied by the PUCCH for transmitting the feedback information of the first SPS PDSCH within the second time unit comprising at least one of:
a downlink symbol, a flexible symbol or a time domain symbol occupied by a synchronization signal or a broadcast channel.

13. A method of determining a feedback codebook, comprising:
determining, by a network device, a first time unit for transmitting feedback information of a first semi persistent scheduling (SPS) physical downlink shared channel (PDSCH), wherein a time unit preconfigured for transmitting the feedback information of the first SPS PDSCH is a second time unit, and the first time unit is different from the second time unit;
transmitting, by the network device, at least one dynamic scheduling PDSCH inside a set of occasions for first downlink receptions, wherein the set of occasions for first downlink receptions is used for determining a first feedback codebook; and
receiving, by the network device, a second feedback codebook within a first time unit corresponding to the set of occasions for first downlink receptions, wherein the second feedback codebook is obtained by a terminal device according to the first feedback codebook, and the second feedback codebook comprises feedback information corresponding to the at least one dynamic scheduling PDSCH.

14. The method of claim 13, wherein a size of the second feedback codebook is equal to a size of the first feedback codebook.

15. The method of claim 14, wherein
the second feedback codebook further comprises merged feedback information, the merged feedback information is obtained by merging the feedback information of the first SPS PDSCH with feedback information of one SPS PDSCH in at least one second SPS PDSCH, wherein the first SPS PDSCH is transmitted by the network device outside the set of occasions for first downlink receptions, and the at least one second SPS PDSCH is transmitted by the network device inside the set of occasions for first downlink receptions.

16. The method of claim 15, wherein a field, occupied by the merged feedback information, in the second feedback codebook is determined according to a reception occasion, occupied by the one SPS PDSCH in the at least one second SPS PDSCH, in the set of occasions for first downlink receptions, wherein a mapping relationship between each field in the second feedback codebook and each reception occasion in the set of occasions for first downlink receptions is same as a mapping relationship between each field in the first feedback codebook and each reception occasion in the set of occasions for first downlink receptions.

17. The method of claim 15 or 16, wherein when a number of the second SPS PDSCH is multiple, the merged feedback information being obtained by merging the feedback information of the first SPS PDSCH with the feedback information of the SPS PDSCH in the at least one second SPS PDSCH comprises that:
the merged feedback information is obtained by merging the feedback information of the first SPS PDSCH with feedback information of the target second SPS PDSCH in a plurality of second SPS PDSCHs;
the target second SPS PDSCH is a second SPS PDSCH meeting a first preset condition among the plurality of second SPS PDSCHs.

18. The method of claim 17, wherein the first preset condition comprises the following:
a time interval between the target second SPS PDSCH and the first SPS PDSCH is minimum;
the target second SPS PDSCH is an earliest second SPS PDSCH after the first SPS PDSCH;
configuration information of the target second SPS PDSCH is same as configuration information of the first SPS PDSCH;
the configuration information of the target second SPS PDSCH is the same as the configuration information of the first SPS PDSCH, and the time interval between the target second SPS PDSCH and the first SPS PDSCH is minimum; and
the configuration information of the target second SPS PDSCH is the same as configuration information of the first SPS PDSCH, and the target second SPS PDSCH is the earliest second SPS PDSCH after the first SPS PDSCH.

19. The method of claim 14, wherein
in response to that a second preset condition is satisfied between the first SPS PDSCH and a physical uplink control channel (PUCCH) for transmitting feedback information in the first time unit, the second feedback codebook further comprises the feedback information of the first SPS PDSCH, wherein the first SPS PDSCH is transmitted by the network device inside the set of occasions for first downlink receptions, and the first time unit precedes the second time unit.

20. The method of claim 19, wherein a field, occupied by the feedback information of the first SPS PDSCH, in the second feedback codebook is determined according to a reception occasion, occupied by the first SPS PDSCH, in the set of occasions for first downlink receptions, wherein a mapping relationship between each field in the second feedback codebook and each reception occasion in the set of occasions for first downlink receptions is same as a mapping relationship between each field in the first feedback codebook and each reception occasion in the set of occasions for first downlink receptions.

21. The method of claim 14, wherein
the second feedback codebook is the first feedback codebook, and wherein the first SPS PDSCH is received by the terminal device outside the set of occasions for first downlink receptions.

22. The method of claim 13, wherein
the second feedback codebook comprises the first feedback codebook and a third feedback codebook, the third feedback codebook comprising feedback information of at least one first SPS PDSCH, and wherein the at least one first SPS PDSCH is transmitted by the network device outside the set of occasions for first downlink receptions.

23. The method of any one of claims 12 to 20, wherein a resource for transmitting a PUCCH within the second time unit is limited.

24. The method of claim 21, wherein the resource for transmitting the PUCCH within the second time unit being limited comprises:
a time domain symbol occupied by the PUCCH for transmitting the feedback information of the first SPS PDSCH in the second time unit comprising at least one of:
a downlink symbol, a flexible symbol or a time domain symbol occupied by a synchronization signal or a broadcast channel.

25. An apparatus for determining a feedback codebook, comprising:
a first determining unit, configured to determine a first time unit for transmitting feedback information of a first s semi persistent scheduling (SPS) physical downlink shared channel (PDSCH), wherein a time unit preconfigured for transmitting the feedback information of the first SPS PDSCH is a second time unit, and the first time unit is different from the second time unit;
a first receiving unit, configured to receive at least one dynamic scheduling PDSCH inside a set of occasions for first downlink receptions corresponding to the first time unit, wherein the set of occasions for first downlink receptions is used for determining a first feedback codebook; and
a first processing unit, configured to determine a second feedback codebook that is transmitted within the first time unit, wherein the second feedback codebook is obtained according to the first feedback codebook, and the second feedback codebook comprises the at least one dynamic scheduling PDSCH.

26. An apparatus for determining a feedback codebook, comprising:
a second determining unit, configured to determine a first time unit for transmitting feedback information of a first semi persistent scheduling (SPS) physical downlink shared channel (PDSCH), wherein a time unit preconfigured for transmitting the feedback information of the first SPS PDSCH is a second time unit, and the first time unit is different from the second time unit;
a second transmitting unit, configured to transmit at least one dynamic scheduling PDSCH inside a set of occasions for first downlink receptions, wherein the set of occasions for first downlink receptions is used for determining a first feedback codebook; and
a second receiving unit, configured to receive a second feedback codebook within a first time unit corresponding to the set of occasions for first downlink receptions, wherein the second feedback codebook is obtained by a terminal device according to the first feedback codebook, and the second feedback codebook comprises feedback information corresponding to the at least one dynamic scheduling PDSCH.

27. A terminal device, comprising: a first transceiver, a first processor, and a first memory for storing a computer program;
wherein the first transceiver, the first processor and the first memory communicate through a first communication bus;
the first processor is configured to communicate with a network device through the first transceiver; and
the first processor is further configured to cooperate with the first transceiver to implement, when running the computer program stored in the first memory, operations of the method of any one of claims 1 to 12.

28. A network device, comprising: a second transceiver, a second processor, and a second memory for storing a computer program;
wherein the second transceiver, the second processor and the second memory communicate through a second communication bus;
the second processor is configured to communicate with the terminal device through the second transceiver; and
the second processor is further configured to cooperate with the second transceiver to implement, when running the computer program stored in the second memory, operations of the method of any one of claims 13 to 24.

29. A computer-readable storage medium, having stored thereon a computer program, wherein the computer program is executed by a first processor to implement operations of the method of any one of claims 1 to 12; or the computer program is executed by a second processor to implement operations of the method of any one of claims 13 to 24.
